(19) **Europäisches Patentamt**

**European Patent Office**

**Office européen des brevets**

(11) **EP 1 070 686 B1**

(12) **EUROPÄISCHE PATENTSCHRIFT**

(45) Veröffentlichungstag und Bekanntmachung des Hinweises auf die Patenterteilung:
**21.11.2001 Patentblatt 2001/47**

(51) Int Cl.$^7$: **C04B 35/575**

(21) Anmeldenummer: **00113040.0**

(22) Anmeldetag: **23.06.2000**

(54) **Flüssigphasengesinterte Siliciumcarbid-Formkörper mit verbesserter Bruchzähigkeit sowie hohem elektrischen Widerstand und Verfahren zu ihrer Herstellung**

Liquid phase sintered silicon carbide shaped bodies having improved fracture toughness as well as high electrical resistance and method of making them

Corps moulés en carbure de silicium fritté par phase liquide ayant une tenacité à la rupture élevée ainsi une haute résistance électrique et leur procédé de fabrication

(84) Benannte Vertragsstaaten:
**AT DE FI FR GB**

(30) Priorität: **15.07.1999 DE 19933194**

(43) Veröffentlichungstag der Anmeldung:
**24.01.2001 Patentblatt 2001/04**

(73) Patentinhaber: **Wacker-Chemie GmbH**
**81737 München (DE)**

(72) Erfinder:
 • **Schwetz, Karl-Alexander, Dr.**
  **87477 Sulzberg (DE)**
 • **Sigl, Lorenz, Dr.**
  **6600 Lechaschau (AT)**
 • **Kempf, Thomas**
  **87437 Kempten (DE)**
 • **Victor, Georg**
  **87437 Kempten (DE)**

(74) Vertreter: **Potten, Holger et al**
**Wacker-Chemie GmbH**
**Zentralabteilung Patente,**
**Marken und Lizenzen**
**Hanns-Seidel-Platz 4**
**81737 München (DE)**

(56) Entgegenhaltungen:
**EP-A- 0 251 218       EP-A- 0 419 271**
**FR-A- 2 502 612       FR-A- 2 537 568**
**US-A- 4 829 027**

**Beschreibung**

Die Erfindung betrifft flüssigphasengesinterte SiC-Formkörper mit verbesserter Bruchzähigkeit sowie hohem elektrischen Widerstand und Verfahren zu ihrer Herstellung.

Dichtes gesintertes SiC zeichnet sich durch eine Kombination wertvoller Eigenschaften aus wie hohe Härte und Verschleißfestigkeit, Hochtemperaturfestigkeit, hohe Wärmeleitfähigkeit, Thermoschockbeständigkeit, sowie Oxidations- und Korrosionsbeständigkeit. Aufgrund dieser Eigenschaften hat sich heute das festphasengesinterte SiC als nahezu idealer Werkstoff für verschleißbeanspruchte Gleitlager sowie Gleitringdichtungen im chemischen Apparate- und Maschinenbau eingeführt. Zur drucklosen Sinterung wurden Alpha- oder Beta-SiC Sinterpulver mit Partikelgrößen im Submikronbereich (Mittlere Korngröße < 1µm) und ein gleichzeitiger Zusatz von bis zu 2% Kohlenstoff und Bor als Voraussetzungen erkannt. Anstelle von Bor oder Borverbindungen können auch Aluminium und Aluminiumverbindungen oder Beryllium und Berylliumverbindungen mit der selben Wirkung verwendet werden. Während der Sinterung läuft eine SiC-Polytypentransformation sowie Kornwachstum ab, deren Ausmaß von der Art und Menge der Sinteradditive sowie Höhe der Sintertemperatur abhängen. Mit Bor dotierte Beta-SiC-Pulver neigen zur sekundären Rekristallisation (Riesenkornwachstum) während ausgehend von Alpha-SiC-Pulver mit Bor- oder Aluminium-Dotierung ein feinkörniges globulares oder bimodales Gefüge, bestehend aus feiner Matrix mit plattenförmigen Kristallen hohen Streckgrades erhalten wird. Die festphasengesinterten SiC-Körper brechen in der Regel transkristallin und erreichen bei einer relativen Dichte von 95-98% der theoretischen Dichte ( % TD) eine Raumtemperaturfestigkeit von bis zu 450 MPa, die auch bei hohen Temperaturen bis zu 1500°C erhalten bleibt. Einer deutlich breiteren Anwendung dieser SiC-Keramik in der Industrie steht ihre Sprödigkeit im Wege. Aufgrund des hohen kovalenten Bindungsanteiles ist SiC extrem spröde und selbst kleine Fehler im Werkstoffgefüge können zu einem schlagartigen Versagen eines Bauteiles führen.

Deshalb ist es notwendig SiC-Keramiken mit verbessertem Bruchverhalten zu entwickeln und den gestellten Anforderungen an die Zuverlässigkeit der Bauteile gerecht zu werden.

Dichtes gesintertes SiC mit interkristallinem Bruchmodus, verbesserter Bruchzähigkeit und Raumtemperaturfestigkeit kann heute in Analogie zum Siliciumnitrid ($Si_3N_4$) über einen Flüssigphasensinterprozess hergestellt werden. Durch Zugabe geeigneter Metalloxide oder -nitride, die mit SiC und dem anhaftenden $SiO_2$ tiefschmelzende Eutektika bilden, kommt es während des Sintervorganges zur Bildung einer flüssigen Phase, die entscheidend zur Verdichtung der Keramik beiträgt. Als Sinteradditive werden überwiegend Mischungen von $Al_2O_3$ und $Y_2O_3$ empfohlen (M. Omori et al.: US 4502983 (1985) und US 4564490 (1986), sowie R.A. Cutler et al.: US 4829027 (1988)), aber auch $Y_2O_3$ oder andere Sesquioxide der Seltenerdmetalle ($SE_2O_3$) in Kombination mit Aluminiumnitrid (AlN) (K.Y. Chia et al.: US5298470 (1994), M. Nader, Dissertation: INAM, Universität Stuttgart (1995), I. Wiedmann et al.: "Flüssigphasensintern von Siliciumcarbid", in: Werkstoffwoche 1996, Syposium 7: Materialwiss. Grundlagen, Hrsg. F. Aldinger und H. Mughrabi, DGM Informationsgesellschaft, Oberursel (1997), 151-520, H. Kölker et al.: DE 19730770 (1998)). Die Flüssigphasensinterung kann dabei drucklos, d.h. unter Atmosphärendruck, ggf. unter Verwendung von Pulverschüttungen, oder durch Anwendung der Gasdrucksintertechnik bei erhöhtem Gasdruck ohne Einbettmasse durchgeführt werden. Ein von der Wacker-Chemie GmbH unter dem Markennamen EKasic T in die Technik eingeführtes, flüssigphasengesintertes SiC (LPSSiC) zeigt ein praktisch porenfreies feinkristallines Gefüge (mittlere SiC-Korngröße ca. 1 µm), eine Biegefestigkeit von ca. 600 MPa, eine gegenüber festphasengesintertem SiC (SSiC)um 40 bis 60% höhere Bruchzähigkeit und höheres elektrisches Isolationsvermögen (siehe Tabelle 1).

Tabelle 1:

| Eigenschaftsvergleich von SSiC und LPSSiC | | | | | |
|---|---|---|---|---|---|
| SiC-Materialvariante | Sinter-Mechanismus | Sinteradditivgehalte Masse-% | Farbe (polierte Oberfläche) | Spez. elektr. Widerstand Ohm.cm | Bruchzähigkeit* MPa · m$^{1/2}$ |
| EKasic BM (SSiC) | Festphase | < 1,5 (B+C) | schwarz | $10^3$ - $10^4$ | 2,2 |
| EKasic D (SSiC) | Festphase | <1,5(Al+C) | schwarz | $10^{-2}$ - $10^1$ | 2,5 |
| Ekasic T (LPSSiC) | Flüssigphase | 5-6 (AlN+YAG**) | schwarz | > $10^7$ | 3,5*** |

* gemessen nach der Brückenmethode (scharfer Anriß), vgl. K.A.Schwetz et al.: Journal of Solid State Chemistry 133, 68-76 (1997)

** YAG = Y-Al-Granat ($Y_3Al_5O_{12}$)

*** entspricht einem Wert von 8,4 MPa · m$^{1/2}$, gemessen nach der SENB-Methode mit 0,5 mm Kerbweite

Der hohe elektrische Widerstand von EKasic T wird durch das Vorliegen einer kontinuierlichen, glasartigen Korngrenzenphase hervorgerufen, die in Form eines dünnen Filmes (ca. 1 nm) die SiC-Körner isolierend umhüllt. Diese kontinuierliche Korngrenzenphase bildet zusammen mit dem Sinterhilfsmittel Y-Al-Granat, an den Tripelpunkten der SiC-Körner die sogenannte Bindephase, die die SiC-Hartstoffkörner zu einem festen Verbund verbindet. Da die Gefügeentwicklung und die Eigenschaften von flüssigphasengesintertem SiC maßgeblich durch die Wahl der Zusammensetzung (Art und Menge des SiC und der Bindephase) und die speziellen Sinterparameter (Gasatmosphäre, Druck, Temperatur, Zeit) beeinflußt werden, überrascht es nicht, daß von dem Sinteradditivsystem AlN - $Y_2O_3$ (oder $SE_2O_3$ oder YAG ) bereits eine Mehrzahl von SiC-Werkstoffen mit sehr unterschiedlichen Eigenschaften hergestellt werden können.

Nach dem aus der DE 3344263 (entspricht US 4569922, Erf.: K.Suzuki / Fa. Asahi Glass) bekannten Verfahren werden Siliciumcarbidpulver zusammen mit Sinteradditiven auf Basis 3-30 Masse-% AlN, 0-15 Masse-% Oxide der IIIa Metalle (insbesondere Yttrium, Lanthan und Cer) und 0-20 Masse-% $SiO_2$, $Al_2O_3$ oder $Si_3N_4$ unter Argon- oder Stickstoffatmosphäre drucklos oder unter Gasdruck bei 2000-2200°C 2 bis 10 Stunden lang zu SiC-Formkörpern einer Dichte von über 95% der theoretisch möglichen Dichte gesintert, die sowohl bei Raumtemperatur als auch bei 1400°C Biegefestigkeiten >800 MPa aufweisen. Das Gefüge dieser SiC-Sinterkörper zeigt längliche und / oder tafelförmige Körner (mittlere Kornlänge 3-5 μm) eines SiC-AlN Mischkristalles und eine kristalline Korngrenzenphase. Die Zusammensetzung der Sinterkörper besteht im wesentlichen aus SiC mit 2-20 Masse-% Al, 0,2-10 Masse-% N, 0,2-5 Masse-% O und 0 bis 15 Masse-% eines Metalles der Gruppe IIIa. Bei Sinteradditivzusätzen mit weniger als 3 Masse-% AlN werden nur noch mangelhafte Sinterdichten erhalten.

Nach dem aus der japanischen Patentanmeldung Nr. 59-051384 (Offenlegung Nr. 60-195057, 03.10.1985, Erfinder: S. Nagano / Fa. Kyocera) bekannten Verfahren zur Flüssigphasensinterung von Ausgangspulvermischungen, die neben SiC 1-10 Masse-% AlN, 1-15 Masse-% $Y_2O_3$ und bis zu 8 Masse-% $SiO_2$ als Sinteradditive enthalten, werden nach 2-3 stündiger Drucklossinterung unter Argonatmosphäre im Tempeaturbereich 1800-1950°C Sinterkörper mit Dichten zwischen 95 und 99 % TD erzielt, die aufgrund ihres niedrigen elektrischen Widerstandes von 0,5 Ohm cm funkenerosiv bearbeitet werden können.

Nach dem aus der US 5298470 vom 29.03.1994 (entspricht EP 419271, Erf.: Chia et al./Fa. Carborundum) bekanntem Verfahren werden ebenfalls Ausgangspulvermischungen, die neben Siliciumcarbid 0,5-15 Masse-% AlN, 0,1-15 Masse-% $Y_2O_3$ (oder andere $SE_2O_3$) und bis zu 10 Masse-% $SiO_2$ als Sinteradditive enthalten drucklos unter Argonatmosphäre und vorzugsweise unter Verwendung einer Pulvereinbettung gesintert. Das Pulverbett enthält neben SiC ebenfalls die Additive, wodurch deren weitgehende Abreicherung im angrenzenden Sinterkörper, d.h. ihre Reaktion mit SiC zu gasförmigen Zersetzungsprodukten und eine daraus resultierende, mangelhaftere Verdichtung vermieden werden soll.

In Anspruch 28 werden dichte SiC-Sinterkörper hoher Bruchzähigkeit beansprucht, mit einem Gefüge gekennzeichnet durch Feinkörnigkeit, Homogenität, überwiegend äquiaxiale Kornform und Anwesenheit einer diskontinuierlichen kristallinen Begleitphase (bevorzugt Yttriumaluminat) in den Zwickeln (Tripelpunkten) der SiC-Körner.

In den Ansprüchen 35 und 38 werden spezifische elektrische Widerstände kleiner $10^3$ Ohm · cm, überwiegend saubere SiC-SiC-Korngrenzen und Bruchzähigkeiten von mindestens 7 MPa · $m^{1/2}$ gemessen nach der SENB-Methode mit Kerbweiten von 0,5 mm beansprucht.

In den SiC-Körnern sind Anreicherungen der Elemente Aluminium und Stickstoff nachweisbar, jedoch nicht in Mischkristallmengen (im Zehntel-% bis Prozentbereich) sondern in deutlich geringeren Mengen (200-300 ppm). Gemäß Verfahrensbeschreibung liegt keine reine Flüssigphasensinterung sondern ein Mischsintermechanismus ("mixed mode sintering") vor, wonach in der Anfangsphase eine Flüssigphasensinterung über Teilchenumordnung und darauf folgend eine Festphasensinterung ("solid state diffusion sintering") abläuft.

Wie aus Spalte 17, Zeile 3-68 der US 5298470 entnommen werden kann, zieht sich die Flüssigphase - bis auf geringe diskontinuierliche Reste - auf die Tripelpunkte zurück und das zweite Sinterstadium, die Festphasensinterung, schließt sich an, wodurch Verbesserungen in den Sinterkörpereigenschaften erzielt werden können.

Gemäß Spalte 11, Zeilen 12ff kann das "mixed mode Sinterverfahren" in einer Stufe, im Temperaturbereich zwischen 1900 und 2050°C für 3 Stunden oder in zwei Stufen, z.B. eine Stunde bei 1900°C plus eine Stunde bei 2050°C, durchgeführt werden. Bei dem drucklosen "mixed-mode-Sinterverfahren" wurde offenbar davon ausgegangen, feinkörnige SiC-Sinterkörper mit hoher Bruchzähigkeit aber ohne eine kontinuierliche Bindephase herzustellen, da offensichtlich die Meinung vorherrschend war, daß nur mit sauberen SiC-SiC-Korngrenzen die besten Eigenschaften des Endproduktes garantiert werden können.

Allerdings ist bei dem vorgeschlagenen Drucklossinterverfahren insbesondere aufgrund der langen Haltezeiten und den vergleichsweise hohen Sintertemperaturen mit den bekannten Schwierigkeiten zu rechnen, wie hoher Masseverlust durch Bildung flüchtiger Al- und Si-Suboxide ($Al_2O$, AlO, SiO) und Bildung stark poröser Randzonen, was nicht nur eine kostspielige Nachbearbeitung der erhaltenen Sinterkörper erforderlich macht, sondern auch mit einem hohen Verschleiß an Heiz- und Isolationsmaterial der Ofeneinrichtung sowie mit Ausschuß beim Sintern durch mangelhafte Temperaturkontrolle verbunden ist.

Nach dem aus WO 97/03030 vom 30.01.1997 (Erf.: D. Maravic/ Fa. Negawatt) bekannten Verfahren zur Herstellung von elektrisch isolierendem SiC werden hohe Widerstände von >$10^7$ Ohm cm in SiC-Formkörpern erst erreicht, wenn über 6 bis 7 Vol-% Bindephasenanteile nach der Flüssigphasensinterung von SiC unter Zusatz von $Y_2O_3$ + $Al_2O_3$ im fertigen Sinterkörper verbleiben. Dieses Verfahren ist wegen der notwendigen hohen Mengen an Sinteradditiven (10-12 Masse-%) und den bei der drucklosen Sinterung resultierenden hohen Masseverlusten (2,8 bis 4,5 Masse-%) wenig vorteilhaft.

Aus dem Institut für Nichtmetallische Anorganische Materialien der Universität Stuttgart wurde berichtet (Dissertation M. Nader 1995, I. Wiedmann et al.: "Flüssigphasensintern von Siliciumkarbid", in: Werkstoffwoche 1996, Symposium 7: Materialwiss. Grundlagen, Hrsg. F. Aldinger und H. Mughrabi, DGM Informationsgesellschaft, Oberursel (1997), 151-520), daß SiC mit 10 Vol-% Additive auf Basis 60 Mol-% AlN - 40 Mol-% $Y_2O_3$ ohne Verwendung eines Pulverbettes drucklos bei Temperaturen 1950-2000°C unter Stickstoff- oder Argonschutzgas vollständig verdichtet werden kann.

Aus der Ansatzzusammensetzung von 84,4 SiC - 10,3 $Y_2O_3$ - 3,0 AlN - 2,3 $SiO_2$ (Masse-%) und dem Masseverlust beim Sintern von < 3% kann auf mindestens 10 Masse-% Bindephase in den Sinterkörpern geschlossen werden. Das Gefüge ist feinkörnig und zeigt globulare SiC-Körner und eine kontinuierliche, die SiC-Körner umhüllende Bindephase. Durch Röntgenbeugungsanalyse wurden in diesen Körpern als kristalline Bindephasenbestandteile $Y_2O_3$ und Yttrium-Aluminium-Silicium-Oxinitrid nachgewiesen. Diese Sinterkörper sind nicht nur wegen der großen Menge an Bindephase sondern wegen ihrer makroskopischen Inhomogenitäten (poröse Randzonen und Entmischungskanäle) noch stark verbesserungsbedürftig. Mit den Sinteradditiven auf Basis $Al_2O_3$ - $Y_2O_3$ anstelle AlN - $Y_2O_3$ muß infolge sehr hoher Massenverluste im Pulverbett gesintert werden.

Nach dem aus DE 19730770 (1998, Erf.: H. Kölker et al. / Elektroschmelzwerk Kempten GmbH) bekannten Verfahren werden SiC-Ausgangspulvermischungen mit 11,6 bzw. 6,1 Masse-% Sinteradditiven auf Basis AlN-$Y_2O_3$ bzw. AlN-YAG unter Stickstoff- oder Argonatmosphäre zu porenfreien SiC-Körpern gasdruckgesintert. Wie sich bei transmissionselektronenmikroskopischen Untersuchungen zeigte, war die Bindephase im Sinterkörper zu mehr als 10% amorph bzw. als 15 Å breiter amorpher Film in den SiC-Korngrenzen nachweisbar. Die mit der Brückenmethode (scharfer Anriß) gemessene Bruchzähigkeit war mit 3,0 MPa · $m^{1/2}$ um nur 20-40 % höher als diejenige von festphasengesintertem SiC (siehe Tabelle 1, handelsübliche Materialvariante EKasic D).

Die Herstellung von noch zäherem SiC, d.h. die weitere Verbesserung der Bruchzähigkeit von flüssigphasengesintertem SiC ist kürzlich durch Gefügemodifizierung über sogenannte "in-situ Platelet-Verstärkung" gelungen. Hierbei wird durch einen zweistufigen Sinterprozess bzw. eine an die Sinterung anschließende Temperung der Sinterkörper bei hoher Temperatur ein Gefüge mit plättchenförmigen SiC-Körnern gebildet. Aufgrund des anisotropen Kornwachstums von Alpha-SiC bei Temperaturen oberhalb der Sintertemperatur findet ein Umlösen der globularen Körner zu plattenförmigen Körnern, den sogenannten Platelets, statt, deren Kornstreckungsgrad (Verhältnis Plattenlänge zu -dikke) durch Variation des Alpha- / Beta-SiC-Gehalts im Ausgangspulver beeinflußt werden kann (siehe I. Wiedmann et al.: "Flüssigphasensintern von Siliciumcarbid", in: Werkstoffwoche 1996, Symposium 7: Materialwiss. Grundlagen, Hrsg. F. Aldinger und H. Mughrabi, DGM Informationsgesellschaft, Oberursel (1997), 151-520).

Die Plateletverstärkung ist jedoch auch ausgehend von reinem Alpha-SiC-Pulver (ohne Beta-SiC-Gehalt) möglich. Wird beispielsweise ein handelsübliches EKasic T mit 5 bis 6 Masse-% Bindephase und einer Bruchzähigkeit von 3,2 MPa · $m^{1/2}$ bei 2050°C unter einem Argondruck von 20 bar vier Stunden lang getempert, so läuft während der Umkristallisation eine 6H →4H SiC-Polytypentransformation ab (siehe Tabelle 2) und es wird ein homogenes Plateletgefüge mit Kornstreckungsgraden im Bereich 2:1 bis 10:1 erhalten. Die durch Bildanalyse bestimmte mittlere Plateletlänge war 4,5 µm, die maximale Plateletlänge ca. 20 µm. Der nach der Brückenmethode bestimmte $K_{IC}$-Wert war 4,0 ± 0,2 MPa · $m^{1/2}$, d.h. die in-situ Plateletverstärkung führte zu einem weiteren Anstieg der Bruchzähigkeit um 25%.

Tabelle 2

| Charakterisierung des handelsüblichen EKasic T, getemperter Ekasic T - Sinterkörper sowie des Alpha-SiC-Sinterpulvers hinsichtlich ihrer SiC-Polytypenzusammensetzung | | | |
|---|---|---|---|
| SiC-Polytyp (Masse-%) | $\alpha$-SiC-Sinterpulver (grün) | EKasic T Globulares Gefüge (Sinterzustand) | EKasic T Platelet-Gefüge (getempert) |
| 15R | 7 | 4 | - |
| 6H | 89 | 88 | 27 |
| 4H | 4 | 8 | 73 |

Nach dem aus der US 5656218 vom 12.08.1997 (B.W. Lin et al./ Industrial Technology Research Inst./ Taiwan) bekanntem Verfahren kann mit SiC-Sinterpulver aus Alpha-SiC und Beta-SiC im Gewichtsverhältnis Alpha-SiC / Beta-SiC von 90:10 bis 10:90 und 5 bis 20 Masse-% Sinteradditivzusätze auf Basis $Al_2O_3$-$Y_2O_3$ und einer zweistufigen

Sinterung ebenfalls ein Anstieg der Bruchzähigkeit um 22% durch in-situ Plateletverstärkung erreicht werden. Im zweistufigen Sinterprozeß wird zuerst zwischen 1800 und 1950°C für 0,5 bis 8 Stunden dichtgesintert und anschließend bei 1900 bis 2200°C für 0,1 bis 4 Stunden getempert. Die mit einer Anrißbreite von 0,15 mm nach der SENB-Methode ermittelten Bruchzähigkeiten einer mit 3,8 Masse-% $Y_2O_3$ und 6,2 Masse-% $Al_2O_3$ gesinterten SiC-Probe betrugen 4,9 MPa · $m^{1/2}$ (feinkörniges globulares Gefüge) und 6,0 MPa - $m^{1/2}$ (Plateletgefüge mit mittleren Plattenlängen < 5μm). Dieses Verfahren ist aber aufgrund der vergleichsweise hohen Rohstoff- und Prozeßkosten noch nicht für die Massenherstellung von flüssigphasengesintertem SiC geeignet.

Die guten Materialeigenschaften des flüssigphasengesintertem EKasic T haben heute zu seinem bevorzugten Einsatz in Anwendungen, die harte, zähe und temperaturwechselbeständige Bauteile benötigen, geführt. Beispiele für solche Anwendungen sind Beläge für Abstreifleisten in Papiermaschinen, wobei dort ein möglichst geringer Verschleiß insbesondere durch hohe Kantenstabilität der Keramikplatten (Widerstand gegen Abplatzungen) gewährleistet werden muß. Es ist weiterhin bekannt, daß dem flüssigphasengesinterten SiC beispielsweise als Funktionskeramik für Herdplatten-Kochfelder oder Substratplatten für Schreib- und Leseköpfe sowie als Strukturkeramik für schnellaufende Gasdichtungsringe oder Wälzlager (Kugeln, Rollen, Ringe) besondere Bedeutung zukommt, da es gegenüber dem bisher in diesen Anwendungsfeldern bevorzugt verwendeten flüssigphasengesinterten Siliciumnitrid folgende Vorteile aufweist:

SiC ist von der Pulverkostenseite günstiger, die Wärmeleitfähigkeit, die Steifigkeit (E-Modul) und die Härte des SiC sind höher und die Korrosionsbeständigkeit ist bedeutend besser.

Allerdings weisen die bisher bekannten flüssigphasengesinterten SiC-Werkstoffe gegenüber flüssigphasengesintertem Siliciumnitrid noch mangelhafte Bruchzähigkeiten und einen zu niedrigen elektrischen Widerstand auf.

Wie aus dem umfangreichen Stand der Technik ersichtlich, ist es bisher nicht gelungen hochdichte, flüssigphasengesinterte SiC-Formkörper mit globularem feinkörnigen Gefüge mit geringen Mengen an Bindephase kostengünstig herzustellen, die sowohl eine hohe Bruchzähigkeit von mindestens 4,0 MPa · $m^{1/2}$ (gemessen nach der Brückenmethode) als auch hohe spezifische elektrische Widerstände im Bereich $10^7$ bis $10^{12}$ Ohm cm aufweisen.

Es stellt sich somit die Aufgabe, hochverdichtete, praktisch porenfreie Formkörper aus flüssigphasengesintertem SiC zur Verfügung zu stellen, die verbesserte mechanische und elektrische Eigenschaften aufweisen.

Eine weitere Aufgabe der Erfindung ist es, ein Verfahren anzugeben, mit dem derartige Formkörper mit den gewünschten Eigenschaften auf einfache Weise, d.h. unter Verzicht auf ein zweistufiges Hochtemperatur-Sinterverfahren zur in-situ Gefügeverstärkung, wirtschaftlich und reproduzierbar hergestellt werden können.

Die erstgenannte Aufgabe wird gelöst durch einen polykristallinen SiC-Formkörper, der aus 96 Masse-% bis 99,5 Masse-% einer Hartstoffphase, 0 bis 0,1 Masse-% freiem Kohlenstoff und zum Rest aus einer teilkristallinen Bindephase besteht, wobei die Hartstoffphase aus SiC und einem Si-C-Al-O-N Mischkristall besteht und 0,2 bis 1,5 Masse-% gelöstes Aluminium, 0,1 bis 0,5 Masse-% gelösten Stickstoff, 0,01 bis 0,2 Masse-% gelösten Sauerstoff enthält

wobei die Hartstoffphase in Form globularer Körner einer mittleren Korngröße < 4 μm vorliegt, wobei mindestens drei Körner einen Tripelpunkt umschließen

wobei die globularen Körner eine Struktur mit einem Kern und einem den Kern umgebenden Mantel aufweisen, wobei der Kern aus SiC und der Mantel aus einem Si-C-Al-O-N Mischkristall besteht, wobei der Mischkristall ein Al / N Atomverhältnis von 1,0 bis 2,0 aufweist und

die teilkristalline Bindephase aus kristallinen und amorphen Phasen des quaternären Systems Seltenerdmetall - Al - Si - O gebildet wird, wobei die amorphe Phase in Form eines die globularen Körner umgebenden Korngrenzenfilms vorliegt und die kristalline Phase in Form von Ansammlungen an den Tripelpunkten enthaltend Seltenerdmetall-Aluminat vorliegt.

Unter Seltenerdmetall (SE) sind im Sinne der Erfindung die Metalle Sc, Y, sowie die Lanthanoide zu verstehen.

Vorzugsweise handelt es sich um Y, Yb oder Nd.

Besonders bevorzugt handelt es sich um Y.

Vorzugsweise enthält die Hartstoffphase 0,3 bis 1,1 Masse-% gelöstes Aluminium, 0,2 bis 0,4 Masse-% Stickstoff und 0,05 bis 0,15 Masse-% gelösten Sauerstoff.

Das Atomverhältnis Al/N im Si-C-Al-O-N Mischkristall beträgt vorzugsweise 1,2 bis 1,7.

Die mittlere Korngröße der Hartstoffphase liegt vorzugsweise im Bereich 0,8 bis 1,2 μm.

Die Bindephase enthält vorzugsweise sowohl einen Glasfilm, der die Hartstoffkörner kontinuierlich umgibt, als auch kristallinen Y-Al-Granat an den Tripelpunkten der Hartstoffkörner.

Der erfindungsgemäße SiC-Formkörper hat vorzugsweise folgende Eigenschaften:

Dichte mindestens 99,5% der theoretisch möglichen Dichte; dunkelgrüne Färbung von Anschliffen bzw. polierten Oberflächen durch charakteristische Lichtabsorption im rot-gelben Spektralbereich zwischen 1,8 bis 2,2 eV, spezifischer elektrischer Widerstand von mindestens $10^7$ Ohm cm und Bruchzähigkeit gemessen nach der Brückenmethode von mindestens 4,0 MPa m$^{1/2}$.

Gemäß Gleichung

$$1,242 / E = \lambda$$

E ... Photonenenergie in eV
λ ... Wellenlänge in μm (1 μm = 1000 nm)

entspricht das Maximum der Extinktion bei 2,05 eV einer Wellenlänge von 606 nm (orange).

Vorzugsweise liegt der spezifische elektrische Widerstand im Bereich 10$^9$ bis 10$^{12}$ Ohm . cm und die Bruchzähigkeit im Bereich 4,1 bis 4,6 MPa. m$^{1/2}$.

Der erfindungsgemäße polykristalline SiC-Formkörper wird beispielsweise hergestellt durch Gasdrucksintern eines porösen, bis auf einen Restgehalt von maximal 0,1 Masse-% freiem Kohlenstoff entkohlten und unter Bildung von 1,0-1,5 Masse-% SiO$_2$ aufoxidierten Vorkörpers bestehend aus sinterbarem SiC-Pulver, das bis zu 4-Masse-% Sinterhilfsmittel auf Basis eines Gemischs von Seltenerdmetallsesquioxid (SE$_2$O$_3$) oder Seltenerdmetallaluminat (SE-Aluminat) mit Aluminiumnitrid enthält in einer Sinter-HIP-Anlage unter Verwendung von Argon als inertem Schutzgas und Druckübertragungsmedium bei einer Temperatur von 1900-2000°C und einem Druck von 3 bis 100 bar.

Zur Herstellung des Vorkörpers wird ein Pulvergemisch bestehend aus SiC, bis zu 6 Masse-% organische Preßhilfsmittel und bis zu maximal 4 Masse % Sinterhilfsmittel auf Basis SE$_2$O$_3$ oder SE-Aluminat mit Aluminiumnitrid zunächst unter Bildung eines vorgeformten Pulverpreßlings kompaktiert. Dieser vorgeformte Pulverpreßling wird einer ersten Vorerhitzung zur Entbinderung bei 650 °C unter strömender Argonatmosphäre und einer zweiten Vorerhitzung in sauerstoffhaltiger Atmosphäre bei 400 - 500 °C unterzogen, bis sich ein poröser, bis auf einen Restgehalt von maximal 0,1 Masse-% C-frei entkohlter und unter Bildung von 1,0 bis 1,5 Masse-% SiO$_2$ aufoxidierter Vorkörper gebildet hat. Dieser entkohlte und aufoxidierte Vorkörper wird in eine Sinter-HIP-Anlage eingebracht und unter einem Argondruck von 2 bis 10 bar bei einem Masseverlust von maximal 2,5 Masse-% auf 1900 - 2000 °C bis zur Bildung von gasdichten SiC-Sinterkörpern mit maximal 4 Masse-% Bindephase gesintert. Schließlich wird dieser Sinterkörper isotherm unter Erhöhung des Gasdruckes auf bis zu 100 bar durch das als Druckübertragungsmedium verwendete Argongas bis zur Bildung des erfindungsgemäßen SiC-Formkörpers einer Dichte von mindestens 99,5 % TD nachverdichtet.

Als SiC-Ausgangsmaterial für die Pulvergemische können sowohl Alpha-SiC wie Beta-SiC-Pulver mit einer maximale Teilchengröße von 10 μm, vorzugsweise 5 μm und einer mittleren Teilchengröße von < 2 μm, vorzugsweise < 1 μ m verwendet werden.

Vorzugsweise wird von Alpha-SiC der großtechnischen ACHESON - SiC Herstellung mit einem Anteil von mindestens 80 Masse-% SiC als 6H-Polytyp ausgegangen, das nach autogener Mahlung auf Sinterfeinheit (BET-Oberfläche :5 bis 15 m$^2$/g) und nasschemischer Reinigung neben SiC noch Metallverunreinigungen von insgesamt < 0,15 Masse-%, freien Kohlenstoff bis maximal 0,5 Masse-% und anhaftendes SiO$_2$ < 1,0 Masse-% aufweist.

Als Sinteradditiv wird vorteilhaft eine Mischung von Aluminiumnitrid mit einer Verbindung der Gruppe Seltenerdmetalloxid oder Seltenerdmetallaluminate pulverförmig als Kornfraktionen 10 μm und feiner, vorzugsweise 7 μm und feiner, mit mittleren Teilchengrößen im Bereich 1 bis 2 μm eingesetzt. Die oxidischen Seltenerdmetallverbindungen werden immer in Kombination mit Aluminiumnitrid eingesetzt, wobei der Anteil von AlN im Gemisch mit dem SE$_2$O$_3$-Zusatz einem Molverhältnis SE$_2$O$_3$ / AlN im Bereich 1:4 bis 1:14, und im Gemisch mit einem Zusatz auf Aluminatbasis mindestens 10 bis 50 Masse-% AlN entspricht.

Vorzugsweise beträgt der Anteil von AlN im Gemisch mit SE$_2$O$_3$ 65 bis 70 Masse-% AlN und in einem Gemisch mit Y-Al-Granat 30 bis 35 Masse-% AlN.

Die Menge der Sinteradditive muß unabhängig davon, ob die Oxide oder Aluminate zusammen mit AlN verwendet werden, jeweils so bemessen werden, daß die fertigen Pulveransätze bezogen auf das SiC ohne Preßhilfsmittel maximal 4 Masse-% Sinteradditive aufweisen.

Vorzugsweise wird zur Herstellung der Grünkörper das SiC-Pulver zusammen mit bis zu 4 Masse-% Sinteradditiven und mit bis zu 6 Masse-% an Preßhilfsmitteln in an sich bekannter Weise zu einem Schlicker verarbeitet und anschließend in geeigneter Weise, beispielsweise durch Sprühtrocknung des vorgefertigten Schlickers, zu einem freifließenden Granulat verarbeitet. Als Preßhilfsmittel können beispielsweise Polyethylenglykol, Polyvinylalkohol und Stearinsäure eingesetzt werden.

Die Formgebung des Sprühgranulats unter Bildung von Grünkörpern kann durch üblich bekannte Maßnahmen, beispielsweise durch Gesenkpressen oder isostatisches Pressen bei Raumtemperatur vorgenommen werden, wobei üblicherweise ein Druck von 300-3000 bar, vorzugsweise 500-2500 bar angewendet wird. Nach der Formgebung sollten die Grünkörper eine theoretische Dichte von mindestens 50%, vorzugsweise mindestens 60%, bezogen auf die theoretische Dichte des Gemisches aufweisen.

Die vorgeformten Grünkörper werden in einem Schutzgasofen bei Temperaturen von bis zu 700°C entbindert und anschließend unter Zutritt von Luft bei bis zu 500°C zur Entfernung des freien Kohlenstoffes auf Werte $\leq$ 0,1 Masse-% C-frei und zur Bildung von 1,0 bis 1,5 Masse-% zusätzlichem $SiO_2$ erhitzt.

Höhere Mengen als 0,1 Masse-% C-frei in den entbindeten und entkohlten Grünkörpern bewirken Schwarzfärbung, verringerte Bruchzähigkeiten, verringerte spezifische elektrische Widerstände sowie verringerte Korrosions- und Oxidationsbeständigkeit in den aus den Grünkörpern hergestellten hochverdichteten SiC-Formkörpern.

Darüberhinaus ist die Erniedrigung des C-frei - Gehaltes im Grünkörper auf $\leq$ 0,1 Masse-% für die Dichtsinterung sinteradditivarmer Ansätze mit weniger als 2 Vol-% Additivzusatz von entscheidender Bedeutung. Es wurde festgestellt, daß beim Gasdrucksintern von Grünkörpern mit > 0,1 Masse-% C-frei und - 1,5 Vol-% Sinteradditiven auf Basis YAG-AlN oder $SE_2O_3$ - AlN keine ausreichende Verdichtung mehr erhalten wird. Damit eröffnet das erfindungsgemäße Sinter-HIP-Verfahren die Möglichkeit flüssigphasengesintertes SiC mit minimierten Additivzugaben zu verdichten, die weit im sonst für das kostspielige Kapsel-HIPen oder axiale Heißpressen vorbehaltenen Bereich liegen. Die Bildung von mehr als 1,5 Masse-% zusätzlichem $SiO_2$ bei der Vorerhitzung zur Entbinderung und Entkohlung der Grünkörper bringt keinen Vorteil, da hierdurch nur der Masseverlust beim Sintern infolge der Reaktion von überschüssigem $SiO_2$ mit SiC gemäß

$$2\ SiO_2 + SiC \rightarrow 3\ SiO + CO$$

zunimmt. Die entbinderten und entkohlten Grünkörper werden in einem Autoklavenofen (Sinter-HIP-Anlage) unter einem Druck von 5 bar Argon und Temperaturen von 1900-2000°C bis zur geschlossenen Porosität bei ca. 95 % TD gesintert und anschließend unter einem Druck von 20 bis 100 bar Argon bis zur Eliminierung der Restporosität weiter erhitzt. Bei der Gasdrucksinterung unter 5 bar Argon führt die Reaktion der Additive AlN, $SE_2O_3$ oder SE-Aluminat mit dem auf den SiC-Pulverteilchen vorhandenen $SiO_2$ schon weit unterhalb der Sintertemperatur zu einer SE-Si-Al-O-N Flüssigphase. Mit steigender Temperatur nimmt die Viskosität der Flüssigphase ab, und es kann zunächst eine Umlagerung der SiC-Teilchen zu einer dichteren Packung unter Wirkung der Kapillarkräfte erfolgen. Im Bereich der maximalen Sintergeschwindigkeit, ab ca. 1850°C, löst sich SiC-Feinkorn in der Flüssigphase auf und es kommt zu einer mantelförmigen Abscheidung von Si-C-Al-O-N Mischkristallen auf vorhandenem SiC-"Grobkorn" (Kern-Mantel-Struktur), die durch den äußeren Druck beschleunigt wird.

Wie durch chemische Analysen der erfindungsgemäßen Sinterkörper festgestellt wurde (siehe Beispiele) bestehen die Mantelzonen der SiC-Körner aus den sogenannten Sicalonen, in welchen Si- und C-Atome im SiC teilweise durch Al-, N-, und O-Atome ersetzt sind unter Bildung von festen Lösungen aus Si-C-Al-O-N von unterschiedlicher Zusammensetzung. Während des Umlösens von SiC unter Bildung der Si-C-Al-O-N Mischkristalle bis zur Erreichung der Enddichte von >99,5%TD ändert sich die Zusammensetzung der Flüssigphase, d.h. in ihr tritt eine Abreicherung von Al sowie N und Anreicherung von SE, Si und O auf.

Beim Abkühlen der Sinterkörper erstarrt die Flüssigphase unter Bildung einer festen, teilkristallinen Bindephase, bestehend aus kristallinem SE-Aluminat (z.B. Y-Al-Granat), das bevorzugt in den Tripelpunkten zwischen den SiC-Kristallen auftritt und einer in dünner Schicht in den Korngrenzen vorhandenen amorphen Phase. Die Bindephase der erfindungsgemäßen Sinterkörper ist daher zumindest zweiphasig; neben einer kristallinen Aluminatphase liegt intergranular eine kontinuierliche d.h. ein 3-dimensionales Netzwerk bildende, vorzugsweise seltenerdmetall- und stickstofffreie Alumosilikat-Glasphase vor.

Zur Erzielung der Sinterkörpereigenschaften insbesondere der hohen Verdichtung von > 99,5% der theoretisch möglichen Dichte und Vermeidung einer porösen Randzone (Sinterhaut) auf den Sinterkörpern ist die Steuerung von Druck, Temperatur, und Sinteratmosphäre von entscheidender Bedeutung. Der Argongasdruck während der Sinterung liegt bei mindestens 2 bar, vozugsweise im Bereich von 5-100 bar. Bei Anwendung niedrigerer Gasdrücke, von z.B. 1,5 bar wird die SE-Si-Al-O-N -Flüssigphase in oberflächennahen Randzonen infolge Reaktion mit SiC unter Bildung gasförmiger Produkte ($Al_2O$, SiO, CO und $SE_2O$, vgl. T. Grande et al.: "Effect of weight loss on liquid-phase-sintered SiC" in: J. Am. Ceram. Soc. 80, No.4, 1047-52, 1997) zersetzt und die Sinterkörper weisen eine 0,4 mm dicke Sinterhaut in Form einer Schicht mit erhöhter Porosität auf.

SiC-Formkörper mit einer derart porösen Randschicht sind für nahezu sämtliche Anwendungen weniger geeignet und erfordern eine kostspielige und zeitraubende Nachbearbeitung unter Verwendung von Diamantwerkzeugen. Der Enddruck bei der maximalen Sintertemperatur liegt bei 20-100 bar, da höhere Drücke zur Nachverdichtung der Formkörper auf Dichten von > 99,5 %TD nicht erforderlich sind und auch zu höheren Anlage- und Betriebskosten führen würden.

Die Verwendung von gasförmigen Stickstoff oder Stickstoff-Argon-Gasmischungen anstelle Argon als Sinteratmosphäre hat sich nicht als vorteilhaft erwiesen, da hierdurch eine unerwünschte Viskositätserhöhung der Flüssigphase und Änderung der Bindephasezusammensetzung verursacht wird.

Sintertemperaturen von 2000°C sollten bei der Gasdrucksinterung nicht überschritten werden, um übermäßiges Kornwachstum zu vermeiden. Beim Sintern tritt geringes isotropes Kornwachstum auf; beispielsweise erhöht sich die SiC-Korngröße von durchschnittlich 0,7 μm auf nur 0,9 μm, wodurch gute Festigkeitseigenschaften der Endprodukte mit 4-Punkt-Biegefestigkeiten im Bereich 550-650 MPa und ein 100%ig interkristalliner Bruchmodus garantiert werden können. Die mit der Gasdrucksinterung verbundene lineare Schrumpfung von etwa 15-20 % läuft unter Beibehaltung der ursprünglichen geometrischen Form der Grünkörper ab und ist genau erfaßbar, so daß auf eine Nachbearbeitung der Sinterkörper oft verzichtet werden kann.

Der Masseverlust beim Sintern von durchschnittlich 2% ist hauptsächlich darauf zurückzuführen, daß ein Teil des in den Grünkörpern vorhandenen $SiO_2$ mit SiC unter Bildung von SiO und CO reagiert hat. Desweiteren läßt sich aus der Stickstoffbilanz der Ausgangs- und Endprodukte schließen, daß der über Aluminiumnitrid eingebrachte Stickstoff nicht vollständig zusammen mit Aluminium und Sauerstoff aus der Flüssigphase als Si-C-Al-O-N fest gelöst wird, sondern auch geringe Mengen in elementarer Form in die Gasatmosphäre abgegeben werden. Die Möglichkeit extensiver Si-C-Al-O-N Bildung ist besonders vorteilhaft, da hierdurch auch eine bessere Benetzung der Flüssigphase erzielt wird und die aus einer gegebenen Menge an Flüssigphase gebildete Menge an oxidischer Bindephase reduziert werden kann. Die daraus resultierende Zunahme des Hartstoffanteiles wirkt sich außerdem verbessernd auf das Korrosions- und Verschleißverhalten aus.

Die erfindungsgemäßen flüssigphasengesinterten SiC-Formkörper sind insbesondere hinsichtlich ihrer Bruchzähigkeit und ihres spezifischen elektrischen Widerstandes solchen, die gemäß dem Stand der Technik unter Verwendung von > 4 Masse-% Sinteradditiven auf Basis Gemische von Aluminiumnitrid mit $SE_2O_3$, oder Seltenerdmetallaluminat durch Gasdrucksinterung hergestellt worden sind, eindeutig überlegen, wie durch Vergleichsversuche nachgewiesen werden konnte. Die erzielte Bruchzähigkeit ist mindestens gleich hoch oder höher als diejenige, die bisher durch eine in-situ Plateletverstärkung erhalten werden konnte.

Die erfindungsgemäßen flüssigphasengesinterten SiC-Formkörper können daher für ein breites Anwendungsspektrum genutzt werden. Sie können beispielsweise sowohl als Konstruktionswerkstoffe im Maschinenbau als auch als Eunktionswerkstoffe in der Elektrotechnik eingesetzt werden. So lassen sich die erfindungsgemäßen SiC-Formkörper insbesondere als zähe Strukturkeramik für Gasdichtungsringe bei hohen Drehzahlen und Fliehkräften oder für Wälzlagerkomponenten oder für Panzerplatten (z.B. für schußsichere Westen) und als isolierende Funktionskeramik für Herdplatten, Topfböden und Substratplatten für Schreib- und Leseköpfe verwenden.

Die Erfindung betrifft somit auch Gasdichtungsringe, Wälzlagerkomponenten, Panzerplatten, Herdplatten , Topfböden oder Substratplatten bestehend aus erfindungsgemäßen SiC-Formkörpern.

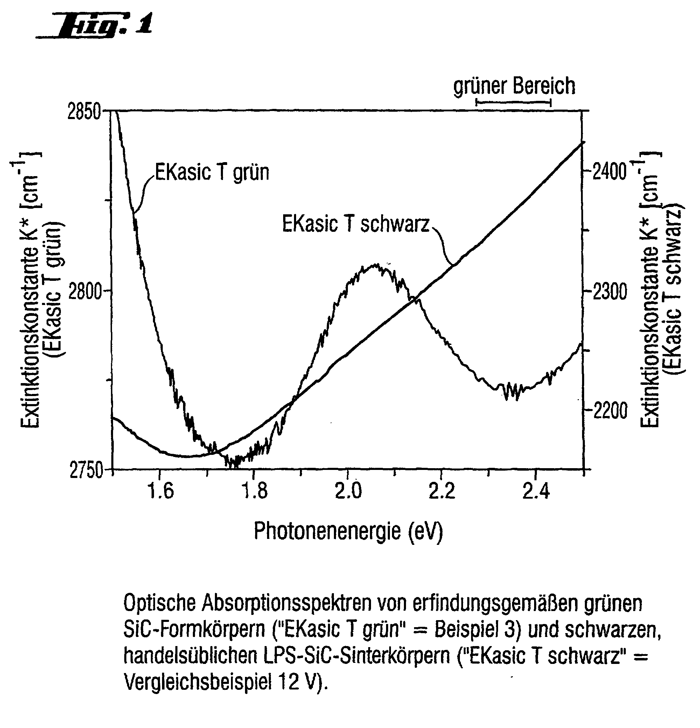

In der Figur 1 sind die optischen Extinktionsspektren der Sinterkörper aus Beispiel 3 ("EKasic T grün") und Vergleichsbeispiel 12 V ("EKasic T schwarz") dargestellt. Wie durch Vergleich der zwei Spektren zu erkennen ist, ist für die Grünfärbung der erfindungsgemäßen Sinterkörper eine charakteristische Absorptionsbande im rot-gelben Bereich bei 1,8 bis 2,2 eV verantwortlich. Desweiteren zeigt das Spektrum des grünen Siliciumcarbids eine höhere Transmission im grünen Spektralbereich. Die dunkelgrüne Farbe bietet einen dekorativen Effekt und ist insbesondere für die Anwendung der erfindungsgemäßen Sinterkörper in dekorativen Anwendungen wie z.B. als Herdplatte in Kochfeldern interessant.

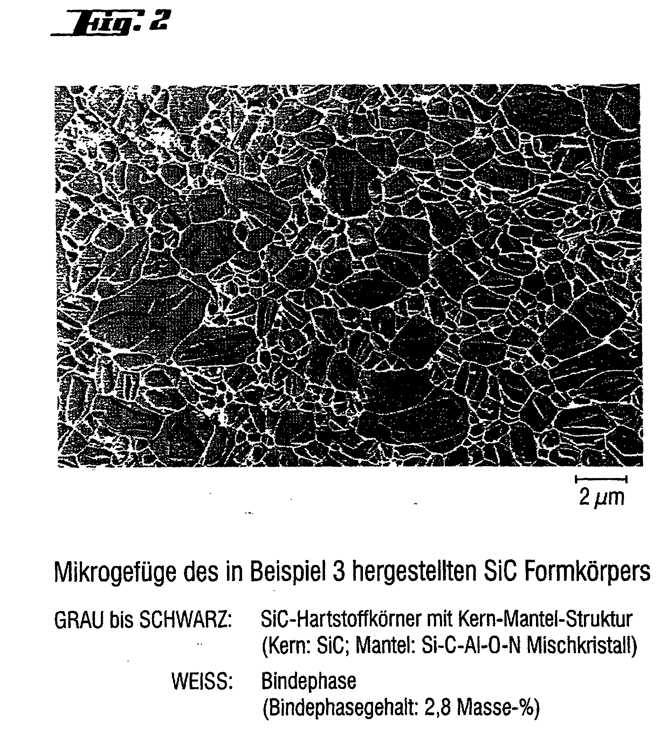

Die Figur 2 zeigt das Gefüge des durch Gasdrucksinterung von Alpha-SiC mit 3 Vol.-% Sinteradditivzusatz auf Basis $Y_2O_3$-AlN (Beispiel 3) erhaltenen Sinterkörpers einer Sinterdichte von 3,23 g/cm$^3$, einer Gesamtporosität von 0,1 Vol.-%, eines Gehaltes an Bindephase von 2,8 Masse-%, eines spezifischen elektrischen Widerstandes von 1,5 x 10$^{11}$ Ohm cm und einer Bruchzähigkeit von 4,3 MPa · m$^{1/2}$. Die SiC-Hartstoffkörner (grau) enthalten 1,04 Masse-% gelöstes Aluminium, 0,34 Masse-% gelösten Stickstoff und 0,10 Masse-% gelösten Sauerstoff. Sie weisen eine globulare Kornform und eine Kern-Mantel-Struktur bestehend aus tiefergeätzten SiC-Primärkörnern (Kerne) und weniger stark geätzten Si-C-Al-O-N Mischkristallen (Mäntel) auf. Das Al / N Atomverhältnis im SiCAlON beträgt 1,6. Die Bindephase (weiß) tritt auf in den Korngrenzen als amorpher dünner Film und zum größten Teil in Tripelpunkten zwischen den SiC-Körnern als kristalliner Y-Al-Granat. Durch Bildanalyse wurde eine Korngrößenverteilung feiner 5 μm und eine mittlere SiC-Korngröße von 0,9 μm ermittelt.

Die folgenden Beispiele dienen der weiteren Erläuterung der Erfindung.

**Beispiele 1 bis 4 und Vergleichsbeispiele 1V bis 4V**

Als Ausgangspulver wurde grünes Alpha-SiC Sinterpulver mit einer spezifischen Oberfläche von 12,1 m$^2$/g und einer mittleren Teilchengröße von 0,7 μm verwendet. Das Pulver enthält 0,30% freien Kohlenstoff und 0,45% Restsauerstoff. Als Sinteradditive wurde feines Aluminiumnitrid-Pulver in Kombination mit pulverförmigen Y-Al-Granat ($Y_3Al_5O_{12}$, "YAG") oder $Y_2O_3$ (Yttriumsesquioxid), eingesetzt. Die Sinteradditive wiesen eine Teilchengrößenverteilung von feiner 10 μm und mittlere Teilchengrößen im Bereich 1,2 bis 1,5 μm auf. Es wurden wässrige Schlicker, nach den in Tabelle 3 angegebenen Rezepturen mit systematischer Variation der Art und Menge an Sinteradditiven in den Grenzen 1,5 bis 6,0 Vol.-% Sinteradditivzusatz zubereitet, wobei auf jeweils 100 Gewichtsteile SiC plus Sinteradditive (= dotiertes Sinterpulver) 6 Gewichtsteile organische Presshilfsmittel mitverwendet wurden.

Zunächst wurde unter Rühren eine 60%ige Dispersion des SiC-Pulvers in Wasser hergestellt, in die zuvor die Sinter- und Presshilfsmittel gelöst bzw. aufgeschlämmt worden waren. Nach erfolgter Homogenisierung der Dispersion wurde durch Verdünnen mit Wasser ein definiertes Litergewicht von > 1500 g/l eingestellt und der fertig aufbereitete Schlicker über einen Sprühtrockner getrocknet. Die erhaltenen rieselfähigen Pressgranulate (Granulatdurchmesserverteilung 30-300 μm) mit ca. 0,3% Restfeuchte wurden anschließend isostatisch unter einem Druck von 200 MPa zu Zylindern d 35 x 50 mm (35 mm Durchmesser x 50 mm Höhe) mit Gründichten von 62% TD verpresst. Hierauf wurden die Preßteile in einem Schutzgasofen zur schonenden Entfernung der Gleit- und Bindemittel unter strömendem Argon-Schutzgas auf 650°C (Entbinderung) und schließlich an Luft bei 450°C zur Oxidation und Entfernung von anhaftendem Kohlenstoff (Entkohlung) vorerhitzt.

Tabelle 3

| Zusammensetzung der Pulveransätze | | | | | |
|---|---|---|---|---|---|
| Bsp Nr. | SiC* Masse-% | $Y_2O_3$ Masse-% | YAG Masse-% | AlN Masse-% | Sinteradditive total | |
| | | | | | Masse-% | Vol.-% |
| 1 | 98,24 | 0,56 | - | 1,20 | 1,76 | 1,5 |
| 2 | 98,08 | - | 1,30 | 0,62 | 1,92 | 1,5 |
| 3 | 96,48 | 1,12 | - | 2,40 | 3,52 | 3,0 |
| 4 | 96,18 | - | 2,59 | 1,23 | 3,82 | 3,0 |
| 1V | 94,72 | 1,68 | - | 3,60 | 5,28 | 4,5 |
| 2V | 94,26 | - | 3,89 | 1,85 | 5,74 | 4,5 |
| 3V | 92,96 | 2,24 | - | 4,80 | 7,04 | 6,0 |
| 4V | 92,35 | - | 5,19 | 2,46 | 7,65 | 6,0 |

* enthält 0,3% C-frei und 0,9% anhaftendes $SiO_2$

Die Entbinderung und Entkohlung erfolgte nach folgenden Temperatur-/Zeit - Programmen:

Entbinderung (Argon strömend)
20 - 650 °C 20 Stunden
Halten bei 650 °C 5 Stunden

Entkohlung (Luft stationär)
20 - 450 °C 4,5 Stunden
Halten bei 450 °C 3,0 Stunden

Wie aus der Tabelle 4, in der exemplarisch Analysen der nur entbinderten Grünkörper und der entbinderten plus entkohlten Grünkörper der Beispiele 1, 2, 3V und 4V gegenübergestellt sind, hervorgeht, tritt puncto Stickstoffgehalt praktisch keine Veränderung auf, während als Folge der Entkohlungsbehandlung an Luft der Gehalt an freiem Kohlenstoff drastisch von 0,5 auf 0,1 Masse-% gesenkt und der Sauerstoffgehalt durchschnittlich um 0,6 Masse-% erhöht wird. Diese Sauerstofferhöhung entspricht einer Bildung von ca. 1,2 Masse-% $SiO_2$ infolge geringer Aufoxidation des SiC-Submikronpulvers gemäß

$$SiC + 2\,O_2 \rightarrow SiO_2 + CO_2$$

Tabelle 4

| Chemische Analysen von im technischen Argon entbinderten (EB) sowie anschließend durch Glühen an Luft entkohlten (EK) SiC-Grünkörpern | | | | | | | | |
|---|---|---|---|---|---|---|---|---|
| Elemente Masse-% | Beispiel 1 | | Beispiel 2 | | Beispiel 3V | | Beispiel 4V | |
| | EB | EK | EB | EK | EB | EK | EB | EK |
| C-frei | 0,50 | 0,10 | 0,50 | 0,10 | 0,50 | 0,10 | 0,40 | 0,10 |
| O | 0,91 | 1,50 | 1,00 | 1,60 | 1,30 | 1,90 | 2,30 | 2,90 |
| N | 0,33 | 0,34 | 0,16 | 0,17 | 1,30 | 1,30 | 0,70 | 0,71 |
| C-frei Analyse nach DIN 51079-3; O- und N-Analyse über Trägergasheißextraktion | | | | | | | | |

Die auf Raumtemperatur abgekühlten, entbinderten und entkohlten Preßkörper wurden anschließend in Graphittiegeln, die in der Heizzone einer Sinter-HIP-Ofenanlage eingesetzt waren, unter einem Argondruck von 5 - 95 bar dichtgesintert. Das Dichtsintern erfolgte nach folgendem Temperatur-/Druck-Schema:

| 20 - 1200 °C / | 0,01 bar: 90 min |
|---|---|
| 1200 - 1750 °C / | 5 bar: 90 min |
| 1750 - 1960 °C / | 5 bar: 60 min |
| 1960 °C / | 5 bar: 40 min |
| 1960 °C / | 95 bar: 20 min |

Nach Beendigung der Haltezeit wurde der Ofen abgeschaltet und die Sinterkörper im Ofen unter einem Druck von 85 - 90 bar auf Raumtemperatur abgekühlt.

Die Sinterkörper hatten ein Dichte von übereinstimmend > 99,5 % der theoretisch möglichen Dichte und erfuhren während der Flüssigphasensinterung eine lineare Schwindung von 18 % sowie einen Masseverlust von rund 2 %.

Von den Formkörpern wurden nach Durchführung der Auftriebsdichtemessungen, durch Schneiden, Schleifen und Polieren keramographische Anschliffe für die Gefüge- und Porositätsuntersuchungen, durch Rund- und Planschleifen tablettenförmige Prüfkörper mit den Abmessungen d 26 x 5 mm für die Bestimmung des spezifischen elektrischen Widerstandes sowie durch Schneiden, Schleifen und Läppen prismatische Biegestäbchen 3 x 4 x 45 mm für die Bestimmung der Bruchzähigkeit hergestellt. Die hochglanzpolierten Anschliffe der Sinterkörper zeigten übereinstimmend eine dunkelgrüne Färbung. Die Volumenprozente Porosität (P), für die Berechnung der Verdichtung in Prozent der theoretischen Dichte (% TD) nach 100 - P = % TD, wurden lichtmikroskopisch mit einem Bildanalysesystem der Firma Kontron anhand polierter Anschliffe mit jeweils zehn Meßfeldern bei 500-facher Vergrößerung bestimmt. Die Bestimmung der mittleren Korngröße erfolgte ebenfalls bildanalytisch anhand rasterelektronenmikroskopischer Aufnahmen bei 2500-facher Vergrößerung durch Ausmessen von jeweils 1000 - 1500 Körnern (äquivalenter Kreisdurchmesser) nach Gefügeentwicklung der Anschliffe mit chemischer Plasmaätzung ($CF_4$ / $O_2$ Gasgemisch 1 : 1, 3 min, $10^{-5}$ bar). Zur Charakterisierung der dunkelgrünen Färbung wurden optische Extinktionsmessungen von Dünnschliffen (d < 50 μm) mit einem Perkin-Elmer-Gitterspektrometer (Typ Lambda 19) im Spektralbereich 1,5 bis 4,0 eV Photonenenergie (entsprechend Wellenlängen von 310 bis 820 nm) durchgeführt. Die Bestimmung des spezifischen elektrischen Widerstandes erfolgte bei Raumtemperatur nach dem Dreileitermessverfahren. Das Messprinzip beruht auf Messung des Stromes durch die Probe bei einer vorgegebenen Gleichspannung von 100 Volt und Ableitung von Oberflächenströmen über eine Schutzringelektrode gegen Masse. Als Gleichspannungsquelle diente ein Präzisions-Pico-Ampere/Tera-Ohmmeter PATO 12 der Fa. Dr. Thiedig, Berlin, das sowohl die Spannung vorgibt als auch den Meßstrom durch die Probe direkt in den Absolütwiderstand umrechnet. Die Bruchzähigkeitsmessungen wurden anhand der planparallel geschliffenen Biegestäbchen über Rissverlängerung mit der Brückenmethode (vgl. K.A. Schwetz et al.: Journal of Solid State Chemistry 133, 68-76 (1997) durchgeführt. Bruchstücke der Biegestäbchen wurden in einer Schlagbohrmühle mit SiC-Mahleinsätzen auf eine Korngröße unter 50 μm zerkleinert für die röntgenographische Phasenanalyse, die chemischen Elementanalysen und Bestimmungen des prozentualen Gehaltes an Bindephase. In den zerkleinerten Sinterkörpern war röntgenographisch neben SiC übereinstimmend Y-Al-Granat (YAG) als kristalline Bindephase nachweisbar. Zur Bestimmung des prozentualen Gehaltes an Bindephase wurden die zerkleinerten Sinterkörper zum Lösen der Begleitphase mit konzentrierter Salzsäure im Autoklaven mit Polytetrafluorethylen-(PTFE-) Einsatz bei 220 °C erhitzt. Der Bindephasenanteil ergibt sich rechnerisch aus der Differenz zwischen 100 % und dem nach dem Druckaufschluß der Bindephase verbliebenen unlöslichen SiC-Anteil ("Rückstands-SiC"). Um Veränderungen der chemischen Zusammensetzung des SiC als Folge der Flüssigphasensinterung nachzuweisen, wurde das Rückstands-SiC ebenfalls einer quantitativen Elementanalyse unterzogen. Im Rückstands-SiC war übereinstimmend kein Yttrium aber eine starke Substitution von Silicium durch Aluminium und eine schwächere von Kohlenstoff durch Stickstoff und Sauerstoff nachweisbar (Si-C-Al-O-N Bildung).

In der Tabelle 5 sind die chemischen Analysen der Sinterkörper der Beispiele 1, 2, 3 und 3V denjenigen der SiC-Rückstände nach Extraktion der Bindephase über Druckaufschluss gegenübergestellt.

Tabelle 5

| Chemische Analysen (Angaben in Masse-%) | | | | | | | |
|---|---|---|---|---|---|---|---|
| Beispiel Nr./Material | Al | Y | O | N | C*** | Si** | Atomverh. Al/N im SiCAlON |
| 1/SK | 0,80 | 0,40 | 0,42 | 0,17 | 28,91 | 69,3 | |
| 1/R | 0,60 | -* | 0,14 | 0,22 | 29,70 | 69,3 | 1,4 |
| 2/SK | 0,77 | 0,43 | 0,32 | 0,19 | 29,03 | 69,3 | |
| 2/R | 0,36 | - | 0,08 | 0,19 | 29,57 | 69,8 | 1,0 |
| 3/SK | 1,50 | 0,82 | 0,86 | 0.31 | 28,53 | 68,0 | |
| 3/R | 1,04 | -* | 0,10 | 0,34 | 29,51 | 69,0 | 1,6 |
| 3V/SK | 2,82 | 1,62 | 1,72 | 0.52 | 27,62 | 65,7 | |
| 3V/R | 1,41 | -* | 0,13 | 0,50 | 29,70 | 68,3 | 1,5 |

*...Wert kleiner 0,001 Masse-%(< 10 ppm)

**...indirekt aus der Differenz auf 100 Masse-%

***...C-gesamt Gehalt (C-frei Gehalt ≤ 0,1 Masse-%) SK........Sinterkörper R.........SiC-Rückstand

Aus den chemischen Analysen ergab sich, daß das Rückstands-SiC in Abhängigkeit von der gewählten Menge an Flüssigphase im Sinterkörper noch 0,4 bis 1,4 Masse-% Aluminium, 0,2 bis 0,5 Masse-% Stickstoff und 0,1 bis 0,2 Masse-% Sauerstoff in fester Lösung enthält. Das Atomverhältnis Al / N im Si-C-Al-O-N Mischkristall liegt im Bereich 1,0 bis 2,0, vorzugsweise im Bereich 1,2 bis 1,7.

Es zeigte sich, daß das Rückstands-SiC praktisch yttriumfrei war, womit bewiesen ist, daß nach dem erfindungsgemäßen Verfahren Yttriumatome nicht in das Gitter des Siliciumcarbids eingebaut werden können. Da Y-Al-Granat röntgenographisch nachweisbar war, ist nahegelegt, daß das Yttrium hauptsächlich in Form der Verbindung $Y_3Al_5O_{12}$ als kristalliner Bestandteil der Bindephase vorliegt. Der Anteil an YAG im Sinterkörper kann näherungsweise über folgende Beziehung ermittelt werden:

$$Y \times 2{,}225 = YAG$$

Y = Masse-% Y, emissionsspektralanalytisch (ICP-OES) nach alkalischem Aufschluß der Sinterkörper

YAG = Masse-% $Y_3Al_5O_{12}$

2,225 = stoichiometrischer Faktor zu Umrechnung von Yttrium auf YAG

Da die Stickstoffwerte in den SiC-Rückständen mit denjenigen der Sinterkörper gut übereinstimmen kann im Rahmen der Analysengenauigkeit auf Stickstofffreiheit der Bindephase und Einbau des gesamten Stickstoffs als Si-C-Al-O-N geschlossen werden.

In der Tabelle 6 sind die Messwerte der Sinterdichte, des spezifischen elektrischen Widerstandes und der Bruchzähigkeit in Abhängigkeit von den Gehalten an Bindephase zusammen mit den C-frei Anteilen der hergestellten Sinterkörper angegeben. Diese Ergebnisse zeigen, daß unabhängig von der Menge an Bindephase Sinterdichten > 99,7 % TD, C-frei Gehalte > 0,1 Masse-% und spezifische elektrische Widerstände > $10^7$ Ohm · cm erzielt werden, aber nur mit Sinteradditivzusätzen ≤ 3 Vol.-%, entsprechend Bindephasengehalten < 4,2 Masse-% die erfindungsgemäßen Sinterkörper mit Bruchzähigkeiten von mindestens 4,0 MPa · $m^{1/2}$ erhalten werden können.

Die höchsten spezifischen Widerstände $10^{11}$ bis $10^{12}$ Ohm · cm und Bruchzähigkeiten 4,3 bis 4,5 MPa · $m^{1/2}$ werden dabei ausgehend von 3 Vol.-% Sinteradditivzusatz entsprechend Bindephasegehalten von ca. 3 Masse-% erzielt, was beispielsweise für die Verwendung dieser Sinterkörper als Kochplatten von Vorteil ist. Die Formkörper der Beispiele 1V bis 4V besitzen wegen ihrer vergleichsweisen hohen Bindephasengehalte nur noch mangelhafte Bruchzähigkeiten von < 3,8 MPa · $m^{1/2}$. Um eine maximale Zähigkeit zu erhalten muß also sowohl der C-frei Gehalt als auch der Bindephasengehalt einen kritischen Grenzwert unterschreiten.

Tabelle 6

| Sinterkörpereigenschaften | | | | | | | |
|---|---|---|---|---|---|---|---|
| **Beispiel Nr.** | **SD g/cm$^3$** | **P Vol.-%** | **Verdichtung % TD** | **Bindephasen- Gehalt Masse-%** | **C-frei Gehalt Masse-%** | **Spez. Elektr. Widerstand Ohm · cm** | **Bruchzähigkeit MPa · m$^{1/2}$** |
| **1** | 3,18 | 0,3 | 99,7 | 1,6 | 0,07 | $1,8 \cdot 10^9$ | 4,0 |
| **2** | 3,19 | 0,3 | 99,7 | 2,0 | 0,10 | $1,8 \cdot 10^7$ | 4,2 |
| **3** | 3,23 | 0,1 | 99,9 | 2,8 | 0,08 | $1,5 \cdot 10^{11}$ | 4,3 |
| **4** | 3,23 | 0,2 | 99,8 | 3,5 | 0,08 | $2,3 \cdot 10^{11}$ | 4,5 |
| **1V** | 3,23 | 0,2 | 99,8 | 4,2 | 0,08 | $1,0 \cdot 10^{10}$ | 3,7 |
| **2V** | 3,24 | 0,2 | 99,8 | 4,8 | 0,07 | $1,1 \cdot 10^{11}$ | 3,8 |
| **3V** | 3,24 | 0,3 | 99,7 | 5,3 | 0,08 | $7,9 \cdot 10^7$ | 3,8 |
| **4V** | 3,25 | 0,3 | 99,7 | 6,0 | 0,09 | $1,8 \cdot 10^{11}$ | 3,8 |
| SD...Sinterdichte, P...Porosität, % TD...% der theoretischen Dichte | | | | | | | |

Aufgrund der niedrigen C-frei Gehalte von ≤ 0,1 Masse-% zeigten geläppte und polierte Oberflächen der Sinterkörper dunkelgrüne Färbung.

**Vergleichsbeispiele 5 V bis 12 V**

Die Beispiele 1 bis 4 und 1V bis 4V wurden wiederholt mit der Abänderung, daß die Presskörper vor der Sinterung keiner Entkohlungsbehandlung an Luft sondern nur einer Hitzebehandlung zur Entbinderung unter Argonatmosphäre unterzogen wurden. Die Entbinderung erfolgte nach folgendem Temperaturschema:

20 - 650 °C:          20 Stunden
Halten bei 650 °C:      5 Stunden.

In der Tabelle 7 sind die C-, O- und N- Analysen der Pulvermischungen aus den Vergleichsbeispielen 5V, 6V, 11V und 12V zusammen mit denjenigen der entbinderten Grünkörpern angegeben. Wie aus dem Vergleich der entsprechenden Analysenwerte hervorgeht, werden als Folge der Entbinderung um durchschnittlich ca 0,25 Masse-% erhöhte Sauerstoff- und C-frei Gehalte erhalten, während die Stickstoffgehalte konstant bleiben. Nach der Entbinderung enthalten sämtliche Grünkörper übereinstimmend ca. 0,5 Masse-% freien Kohlenstoff, der in etwa je zur Hälfte aus dem SiC-Sinterpulver und den bei der Entbinderung pyrolysierten Preßhilfsmitteln stammt. Aus den um durchschnittlich 0,25 % erhöhten Sauerstoffgehalten kann auf Bildung von 0,5 Masse-% $SiO_2$ als Folge einer geringfügigen Aufoxidation von SiC-Feinstkornanteilen bei der Entbinderung geschlossen werden (Argonschutzgas mit technischer Reinheit).

Tabelle 7

| Analysenvergleich Sinterpulver / Grünkörper | | | | | | | | |
|---|---|---|---|---|---|---|---|---|
| Elemente Masse-% | Beispiel 5V | | Beispiel 6V | | Beispiel 11V | | Beispiel 12V | |
| | SP | EB | SP | EB | SP | EB | SP | EB |
| C-frei | 0,27 | 0,52 | 0,27 | 0,50 | 0,26 | 0,55 | 0,26 | 0,45 |
| O | 0,60 | 0,91 | 0,98 | 1,00 | 0,92 | 1,30 | 2,10 | 2,30 |
| N | 0,36 | 0,33 | 0,18 | 0,16 | 1,40 | 1,30 | 0,72 | 0,70 |
| SP...Sinterpulver mit Sinterhilfsmitteln dotiert EB...entbinderter Grünkörper | | | | | | | | |

Die entbinderten Grünkörper wurden unter den gleichen Bedingungen wie für Beispiel 1 bis 4 und 1V bis 4V angegeben gesintert. Wie aus den Daten der Tabelle 8 ersichtlich, werden durch Gasdrucksinterung von SiC-Grünkörpern, die ohne Oxidationsglühung entbindert wurden, d.h. durch Mitverwendung von anhaftendem freien Kohlenstoff in Mengen von über 0,1 Masse-% im Sinterkörper, die erfindungsgemäßen SiC-Körper nicht mehr erhalten. Die Körper sind zwar ab Bindephasegehalten von 2,5 Masse-% vollständig verdichtet, aufgrund ihres hohen C-frei Gehaltes von größer 0,1 Masse-% sind jedoch die Werte der Bruchzähigkeit und des spezifischen elektrischen Widerstandes deutlich gegenüber denjenigen der Beispiele 1 bis 4 verschlechtert.

Tabelle 8

| Sinterkörpereigenschaften | | | | | | | |
|---|---|---|---|---|---|---|---|
| Beispiel Nr. | SD g/cm$^3$ | P Vol.-% | Verdichtung % TD | Bindephasen-Gehalt Masse-% | C-frei Gehalt Masse-% | Spez. elektr. Widerstand Ohm · cm | Bruchzähigkeit MPa · m$^{1/2}$ |
| 5V | 2,73 | 13,6 | 86,4 | 1,4 | 0,31 | $1,2 \cdot 10^7$ | 2,8 |
| 6V | 2,91 | 8,7 | 91,3 | 1,6 | 0,15 | $4,8 \cdot 10^5$ | 3,1 |
| 7V | 3,21 | 0,2 | 99,8 | 2,5 | 0,28 | $7,8 \cdot 10^9$ | 3,3 |
| 8V | 3,24 | 0,1 | 99,9 | 3,1 | 0,20 | $3,2 \cdot 10^9$ | 3,5 |
| 9V | 3,22 | 0,2 | 99,8 | 4,0 | 0,40 | $5,0 \cdot 10^9$ | 3,6 |

Tabelle 8   (fortgesetzt)

| Sinterkörpereigenschaften | | | | | | | |
|---|---|---|---|---|---|---|---|
| Beispiel Nr. | SD g/cm$^3$ | P Vol.-% | Verdichtung % TD | Bindephasen-Gehalt Masse-% | C-frei Gehalt Masse-% | Spez. elektr. Widerstand Ohm · cm | Bruchzähigkeit MPa · m$^{1/2}$ |
| 10V | 3,24 | 0,2 | 99,8 | 4,5 | 0,30 | $3,0 \cdot 10^9$ | 3,5 |
| 11V | 3,22 | 0,5 | 99,5 | 5,2 | 0,49 | $1,0 \cdot 10^7$ | 3,6 |
| 12V | 3,25 | 0,3 | 99,7 | 5,8 | 0,23 | $3,4 \cdot 10^9$ | 3,5 |
| SD...Sinterdichte, P...Porosität, % TD...% der theoretischen Dichte | | | | | | | |

Die hochglanzpolierten Anschliffe der Proben 5 V bis 12 V waren schwarz gefärbt, was auf das Vorliegen von elementarem Kohlenstoff in Mengen von 0,15 - 0,50 Masse-% als Begleitphase zurückgeführt werden kann. Aus den für die Beispiele 5V und 6V aufgeführten Ergebnissen geht klar hervor, daß bei Verwendung von nur 1,5 Vol.-% Sinteradditivzusatz aufgrund des hohen Kohlenstoffpotentials beim Sintern keine ausreichende Verdichtung mehr erhalten wird, d.h. die Sinterung bleibt im Stadium offener Porosität bei Dichten < 92 % TD stehen. Demgegenüber werden nach dem erfindungsgemäßen Verfahren (siehe Tabelle 6, Beispiele 1 und 2) auch für minimierte Gehalte an Bindephasen (< 2 Masse-%) praktisch porenfreie SiC-Formkörper mit Bruchzähigkeiten ≥ 4,0 MPa · m$^{1/2}$ erhalten. Die Sinterkörper der Beispiele 7V bis 12V zeigen trotz vollständiger Verdichtung mit Bindephasegehalten von 2,5 bis 5,8 Masse-% nur Bruchzähigkeiten ≤ 3,6 MPa m$^{1/2}$ und spezifische elektrische Widerstände im Bereich 1 x 10$^7$ bis 8 x 10$^9$ Ohm cm. Die Beispiele 11V und 12V charakterisieren den vorbekannten Stand der Technik (handelsübliches Markenprodukt EKasic T).

Die folgende Tabelle 9 zeigt zum Vergleich die Korrosions- und Oxidationsbeständigkeit von einem erfindungsgemäßen Prüfling und zwei Vergleichsprüflingen.

Tabelle 9

| Beispiel Nr. | Korrosionsbeständigkeit (Korrosionstiefe) | Oxidationsbeständigkeit (Massezunahme) |
|---|---|---|
| 2 | 2 µm | 0,7 mg/cm$^2$ |
| 10V | 30 µm | 2,5 mg/cm$^2$ |
| 12V | 60 µm | 3,1 mg/cm$^2$ |
| Bedingungen: Hydrothermale Korrosion bei 150 °C, 70 Stunden, in 0,1 n HCl-Lösung, Oxidation bei 1400 °C, 100 Stunden, an Luft | | |

Die Werte der Tabelle 9 zeigen, daß der erfindungsgemäße Formkörper eine viel höhere Korrosions- und Oxidationsbeständigkeit aufweist als die Vergleichsprüflinge.

**Beispiele 5 und 6:**

Beispiel 3 wurde wiederholt mit den wesentlichen Abänderungen, daß von einem Alpha-SiC-Sinterpulver mit einer spezifischen Oberfläche von 8,0 m$^2$/g, mit 0,21 % freiem Kohlenstoff und 0,30 % Restsauerstoff, von den Seltenerdmetalloxiden Yb$_2$O$_3$ und Nd$_2$O$_3$ anstelle von Y$_2$O$_3$ ausgegangen wurde, die Preßkörper vor der Sinterung in einem einzigen 6 stündigen Erhitzungsschritt bei 450 °C an strömender Luft (1 Liter pro Min) entbindert und bis auf Gehalte ≤ 0,1 Masse-% C-frei entkohlt wurden und schließlich als Endtemperatur für das Gasdrucksintern 1980 °C gewählt wurden.

Die Ergebnisse dieser Beispiele sind in der Tabelle 10 zusammengestellt. Die nahezu porenfrei verdichteten Sinterkörper zeigten im Anschliff wieder eine dunkelgrüne Färbung und nach Plasmaätzen ein SiC-Gefüge mit mittleren Korngrößen von 1,5 bis 1,8 µm und eine kontinuierliche, d.h. sämtliche SiC-Körner umhüllende, Bindephase. Die SiC-Körner wiesen eine globulare Kornform mit einer Kern-Mantel-Struktur auf. Röntgenographisch waren die kristallinen Aluminate Yb$_4$Al$_2$O$_9$ und Yb$_3$Al$_5$O$_{12}$ (Beispiel 5) sowie NdAlO$_3$ (Beispiel 6) nachweisbar.

Tabelle 10

| Sinterkörpereigenschaften | | | | | | |
|---|---|---|---|---|---|---|
| Beispiel Nr. | Sinteradditivzusatz Masse-% | Verdichtung % TD | Bindephasengehalt Masse-% | C-frei Gehalt Masse-% | Spez. Elektr. Widerstand Ohm · cm | Bruchzähigkeit MPa·m$^{1/2}$ |
| 5 | 2 $Yb_2O_3$- 1 AlN | 99,7 | 3,0 | 0,04 | $1,0 \cdot 10^{12}$ | 4,5 |
| 6 | 1,5 $Nd_2O_3$ - 1,5 AlN | 99,8 | 2,5 | 0,07 | $5,2 \cdot 10^{11}$ | 4,3 |

Wie aus den für die Beispiele 5 und 6 erhaltenen Ergebnissen klar hervorgeht, werden die erfindungsgemäßen SiC-Formkörper auch ausgehend von anderen Seltenerdmetalloxiden und unter Verwendung eines einzigen Vorerhitzungsschrittes zur gleichzeitigen Entbinderung und Entkohlung der Preßkörper erhalten.


**Patentansprüche**

1.  Polykristalliner SiC-Formkörper, der aus 96 Masse-% bis 99,5 Masse-% einer Hartstoffphase, 0 bis 0,1 Masse-% freiem Kohlenstoff und zum Rest aus *einer* teilkristallinen Bindephase besteht, wobei die Hartstoffphase aus SiC und einem Si-C-Al-O-N Mischkristall besteht und 0,2 bis 1,5 Masse-% gelöstes Aluminium, 0,1 bis 0,5 Masse-% gelösten Stickstoff, 0,01 bis 0,2 Masse-% gelösten Sauerstoff enthält

    wobei die Hartstoffphase in Form globularer Körner einer mittleren Korngröße < 4 µm vorliegt, wobei mindestens drei Körner einen Tripelpunkt umschließen
    wobei die globularen Körner eine Struktur mit einem Kern und einem den Kern umgebenden Mantel aufweisen, wobei der Kern aus SiC und der Mantel aus einem Si-C-Al-O-N Mischkristall besteht, wobei der Mischkristall ein Al / N Atomverhältnis von 1,0 bis 2,0 aufweist und
    die teilkristalline Bindephase aus kristallinen und amorphen Phasen des quaternären Systems Seltenerdmetall - Al - Si - O gebildet wird, wobei die amorphe Phase in Form eines die globularen Körner umgebenden Korngrenzenfilms vorliegt und die kristalline Phase in Form von Ansammlungen an den Tripelpunkten enthaltend Seltenerdmetall-Aluminat vorliegt.

2.  SiC-Formkörper nach Anspruch 1, **dadurch gekennzeichnet, daß** er folgende Eigenschaften hat:

    Dichte mindestens 99,5% der theoretisch möglichen Dichte; dunkelgrüne Färbung von Anschliffen bzw. polierten Oberflächen durch charakteristische Lichtabsorption im rot-gelben Spektralbereich zwischen 1,8 bis 2,2 eV, spezifischer elektrischer Widerstand von mindestens $10^7$ Ohm cm und
    Bruchzähigkeit gemessen nach der Brückenmethode von mindestens 4,0 MPa · m$^{1/2}$.

3.  Verfahren zur Herstellung von Formkörpern gemäß Anspruch 1 oder 2, **dadurch gekennzeichnet, daß** ein bis auf einen Restgehalt von maximal 0,1 Masse-% freiem Kohlenstoff entkohlter und unter Bildung von 1,0-1,5 Masse-% $SiO_2$ aufoxidierter poröser Vorkörper bestehend aus sinterbarem SiC-Pulver, das bis zu 4-Masse-% Sinterhilfsmittel auf Basis eines Gemischs von Seltenerdmetallsesquioxid ($SE_2O_3$) oder Seltenerdmetallaluminat (SE-Aluminat) mit Aluminiumnitrid enthält in einer Sinter-HIP-Anlage unter Verwendung von Argon als inertem Schutzgas und Druckübertragungsmedium bei einer Temperatur von 1900-2000°C und einem Druck von 3 bis 100 bar dichtgesintert wird.

4.  Verfahren zur Herstellung eines polykristallinen SiC-Formkörpers gemäß Anspruch 1 oder 2 aus einem Pulverpreßling bestehend aus SiC, einem organischen Preßhilfsmittel und einem Sinterhilfsmittel durch eine Hitzebehandlung zur Erhöhung des Sauerstoffgehaltes sowie Erniedrigung des freien Kohlenstoffgehaltes im SiC und eine anschließende Sinterverdichtung, **dadurch gekennzeichnet, daß** der Pulverpreßling bestehend aus SiC, bis zu 6 Masse-% organischem Preßhilfsmittel und bis zu maximal 4.Masse % eines Gemisches von $SE_2O_3$ oder SE-Aluminat mit Aluminiumnitrid als Sinterhilfsmittel unter Bildung eines vorgeformten Grünkörpers kompaktiert, diesen vorgeformten Grünkörper einer ersten Vorerhitzung zur Entbinderung bei 650 °C unter strömender Argonatmosphäre und einer zweiten Vorerhitzung in sauerstoffhaltiger Atmosphäre bei 400 - 500 °C unterzieht bis zur Bildung eines porösen, auf einen Restgehalt von maximal 0,1 Masse-% C-frei entkohlten und unter Bildung von 1,0 bis 1,5 Masse-% $SiO_2$ aufoxidierten Vorkörpers und dieser entkohlte und aufoxidierte Vorkörper in eine Sinter-HIP-Anlage eingebracht und unter einem Argondruck von 2 bis 10 bar bei Masseverlusten von maximal 2,5 Masse-% auf 1900 - 2000 °C bis zur Bildung eines gasdichten SiC-Sinterkörpers mit maximal 4 Masse-% Bindephase gesintert und schließlich dieser Sinterkörper isotherm unter Erhöhung des Gasdruckes auf bis zu 100 bar durch das als Druckübertragungsmedium verwendete Argongas bis zur Bildung des endgültigen SiC-Formkörpers mit einer Dichte von mindestens 99,5 % TD nachverdichtet wird.

5. Verfahren nach Anspruch 4, **dadurch gekennzeichnet, daß** die Entbinderung und Entkohlung und Aufoxidation des Grünkörpers durch Hitzebehandlung in einem Verfahrensschritt an strömender Luft bei 450 °C durchgeführt wird.

6. Strukturkeramik für Gasdichtungsringe bestehend aus einem polykristallinen SiC-Formkörper gemäß Anspruch 1.

7. Funktionskeramik für Herdplatten oder Topfböden bestehend aus einem polykristallinen SiC-Formkörper gemäß Anspruch 1.

8. Wälzlagerkomponente bestehend aus einem polykristallinen SiC-Formkörper gemäß Anspruch 1.

9. Substratplatten für Schreib- und Leseköpfe bestehend aus einem polykristallinen SiC-Formkörper gemäß Anspruch 1.

10. Panzerplatten gegen den Einschlag von Geschossen bestehend aus einem polykristallinen SiC-Formkörper gemäß Anspruch 1.

**Claims**

1. Polycrystalline SiC shaped body which consists of 96% by mass to 99.5% by mass of a hard-material phase, 0 to 0.1% by mass free carbon, remainder a partially crystalline binder phase, the hard-material phase consisting of SiC and a Si-C-Al-O-N mixed crystal and containing 0.2 to 1.5% by mass dissolved aluminium, 0.1 to 0.5% by mass dissolved nitrogen, 0.01 to 0.2% by mass dissolved oxygen,

   the hard-material phase being in the form of globular grains with a mean grain size of <4 $\mu$m, at least three grains enclosing a triple junction
   the globular grains having a structure with a core and a shell surrounding the core, the core consisting of SiC and the shell consisting of a Si-C-Al-O-N mixed crystal, the mixed crystal having an Al/N atomic ratio of 1.0 to 2.0, and
   the partially crystalline binder phase being formed from crystalline and amorphous phases of the rare earth - Al - Si - O quaternary system, the amorphous phase being present in the form of a grain boundary film which surrounds the globular grains, and the crystalline phase being present in the form of accumulations at the triple junctions containing rare earth aluminate.

2. SiC shaped body according to Claim 1, **characterized in that** it has the following properties:

   density at least 99.5% of the theoretically possible density;
   dark green colouring of ground sections or polished surfaces through characteristic light absorption in the orange spectral region between 1.8 and 2.2 eV,
   resistivity of at least $10^7$ ohm·cm, and
   fracture toughness of at least 4.0 MPa·m$^{1/2}$, measured using the bridge method.

3. Method for producing shaped bodies according to Claim 1 or 2, **characterized in that** a porous intermediate, which has been decarburized down to a residual content of at most 0.1% by mass free carbon, has been partially oxidized to form 1.0-1.5% by mass $SiO_2$ and comprises sinterable SiC powder, which contains up to 4% by mass sintering aid, based on a mixture of rare earth sesquioxide ($RE_2O_3$) or rare earth aluminate (RE aluminate) with aluminium nitride, is consolidated by sintering in a sinter-HIP installation using argon as the inert protective gas and pressure-transfer medium, at a temperature of 1900-2000°C and a pressure from 3 to 100 bar.

4. Method for producing a polycrystalline SiC shaped body according to Claim 1 or 2 from a powder compact consisting of SiC, an organic pressing aid and a sintering aid, by means of a heat treatment to increase the oxygen content and lower the free carbon content in the SiC, followed by a densification by sintering, **characterized in that** the powder compact consisting of SiC, up to 6% by mass organic pressing aid and up to at most 4% by mass of a mixture of $RE_2O_3$ or RE aluminate with aluminium nitride as sintering aid, is densified to form a preshaped green body, this preshaped green body is subjected to a first preheating in order to remove the binder at 650°C under a flowing argon atmosphere and to a second preheating in an oxygen-containing atmosphere at 400-500°C, until a porous intermediate, which has been decarburized down to a residual content of at most 0.1% by mass free C and has been partially oxidized so as to form from 1.0 to 1.5% by mass $SiO_2$, is formed, and this decarburized and partially oxidized intermediate is introduced into a sinter-HIP installation and is sintered, under an argon pressure of from 2 to 10 bar, with mass losses of at most 2.5% by mass, at 1900-2000°C, until a gastight SiC sintered body containing at most 4% by mass binder phase is formed, and finally this sintered body undergoes further densification under isothermal conditions, with the gas pressure being raised to up to 100 bar by the argon gas used as a pressure-transfer medium, until the final SiC shaped body with a density of at least 99.5% TD is formed.

5. Method according to Claim 4, **characterized in that** the binder removal and decarburization and partial oxidation of the green body is carried out by means of a heat treatment in one process step under flowing air at 450°C.

6. Structural ceramic for gas sealing rings, comprising a polycrystalline SiC shaped body according to Claim 1.

7. Functional ceramic for hotplates or pan bases, comprising a polycrystalline SiC shaped body according to Claim 1.

8. Rolling-contact bearing component comprising a polycrystalline SiC shaped body according to Claim 1.

9. Substrate plates for recording and reading heads, comprising a polycrystalline SiC shaped body according to Claim 1.

10. Armour plates to prevent the penetration of bullets, comprising a polycrystalline SiC shaped body according to Claim 1.

**Revendications**

1. Corps moulé polycristallin à base de SiC, qui est constitué de 96 % en masse à 99,5 % en masse d'une phase de matière dure, de 0 à 0,1 % en masse de carbone libre et, pour le reste, d'une phase de liant partiellement cristalline, la phase de matière dure consistant en SiC et en un cristal mixte Si-C-Al-O-N, et contenant de 0,2 à 1,5 % en masse d'aluminium dissous, 0,1 à 0,5 % en masse d'azote dissous, 0,01 à 0,2 % en masse d'oxygène dissous,

   la phase de matière dure étant présente sous forme de grains globulaires ayant une taille moyenne de grain < 4 μm, au moins trois grains entourant un triple point,
   les grains globulaires ayant une structure comportant un noyau et une enveloppe entourant le noyau, le noyau étant constitué de SiC et l'enveloppe étant constituée d'un cristal mixte Si-C-Al-O-N, le cristal mixte présentant un rapport atomique Al/N de 1,0 à 2,0 et la phase de liant partiellement cristalline étant constituée de phases cristallines et
   de phases amorphes du système quaternaire terre rare - Al - Si - O, la phase amorphe se trouvant sous forme d'une pellicule de joint de grain entourant les grains globulaires et la phase cristalline se trouvant sous forme d'amas au niveau des triples points, contenant un aluminate de terre rare.

2. Corps moulé à base de SiC selon la revendication 1, **caractérisé en ce qu'**il présente les propriétés suivantes :

   - densité au moins 99,5 % de la densité théorique possible ;
   - coloration vert foncé de surfaces polies ou affûtées, en raison d'une absorption caractéristique de la lumière dans la région jaune-rouge du spectre entre 1,8 et 2,2 eV,
   - résistance électrique spécifique d'au moins $10^7$ ohms.cm et
   - résistance à la rupture, mesurée selon la méthode par pont, d'au moins 4,0 MPa.m$^{1/2}$.

3. Procédé pour la fabrication de corps moulés selon la revendication 1 ou 2, **caractérisé en ce qu'**une préforme poreuse constituée de poudre de SiC frittable, décarburée jusqu'à une teneur résiduelle en carbone libre d'au maximum 0,1 % en masse et oxydée avec formation de 1,0-1,5 % en masse de $SiO_2$, qui contient jusqu'à 4 % en masse d'adjuvant de frittage à base d'un mélange de sesquioxyde de terre rare ($SE_2O_3$) ou d'aluminate de terre rare (aluminate de SE) avec du nitrure d'aluminium, est frittée à la densité maximale dans une unité de frittage HIP (à compression isostatique à haute température), avec utilisation d'argon en tant que gaz protecteur inerte et d'un milieu de transfert de pression, à une température de 1900-2000°C et sous une pression de 3 à 100 bars.

4. Procédé pour la fabrication d'un corps moulé polycristallin à base de SiC selon la revendication 1 ou 2, à partir d'une préforme de poudre constituée de SiC, d'un adjuvant organique de compression et d'un adjuvant de frittage, par un traitement par la chaleur destiné à augmenter la teneur en oxygène ainsi qu'à diminuer la teneur en carbone libre du SiC, et un compactage par frittage subséquent, **caractérisé en ce que** la préforme de poudre, constituée de SiC, de jusqu'à 6 % en masse d'adjuvant organique de compression et de jusqu'à 4 % en masse au maximum d'un mélange de $SE_2O_3$ ou d'aluminate de SE avec du nitrure d'aluminium en tant qu'adjuvant de frittage, est compactée avec formation d'un corps cru préformé, ce corps cru préformé est soumis à un premier préchauffage destiné à éliminer le liant, à 650°C sous une atmosphère circulante d'argon, et à un second préchauffage à 400 - 500°C, en atmosphère contenant de l'oxygène, jusqu'à la formation d'une préforme poreuse décarburée à une teneur résiduelle en C libre d'au maximum 0,1 % en masse et oxydée avec formation de 1,0 à 1,5 % en masse de $SiO_2$, et cette préforme décarburée et oxydée est introduite dans une unité de frittage HIP et frittée à 1900-2000°C sous une pression d'argon de 2 à 10 bars, avec des pertes de masse d'au maximum 2,5 % en masse, jusqu'à la formation d'un corps fritté à base de SiC, imperméable aux gaz, comportant au maximum 4 % en masse de phase de liant, et enfin ce corps fritté est post-compacté par compression isotherme avec élévation de la pression de gaz jusqu'à 100 bars au moyen du gaz argon utilisé en tant que milieu de transfert de pression, jusqu'à la formation du corps moulé final à base de SiC, ayant une densité d'au moins 99,5 % de la densité théorique.

5. Procédé selon la revendication 4, **caractérisé en ce qu'**on effectue l'élimination du liant et la décarburation et l'oxydation du corps cru par traitement par la chaleur dans une étape de processus à l'air circulant à 450°C.

6. Céramique structurale pour bagues d'étanchéité aux gaz, constituée d'un corps moulé polycristallin à base de SiC selon la revendication 1.

7. Céramique fonctionnelle pour plaques de cuisson ou fonds de pots, constituée d'un corps moulé polycristallin à base de SiC selon la revendication 1.

8. Composant de palier de roulement, constitué d'un corps moulé polycristallin à base de SiC selon la revendication 1.

9. Plaques de support pour têtes de lecture et d'écriture, constituées d'un corps moulé polycristallin à base de SiC selon la revendication 1.

10. Plaques de blindage contre la pénétration de projectiles, constituées d'un corps moulé polycristallin à base de SiC selon la revendication 1.

**Fig. 1**

Optische Absorptionsspektren von erfindungsgemäßen grünen SiC-Formkörpern ("EKasic T grün" = Beispiel 3) und schwarzen, handelsüblichen LPS-SiC-Sinterkörpern ("EKasic T schwarz" = Vergleichsbeispiel 12 V).

## Fig. 2

2 μm

Mikrogefüge des in Beispiel 3 hergestellten SiC Formkörpers

GRAU bis SCHWARZ: SiC-Hartstoffkörner mit Kern-Mantel-Struktur
(Kern: SiC; Mantel: Si-C-Al-O-N Mischkristall)

WEISS: Bindephase
(Bindephasegehalt: 2,8 Masse-%)